# EUROPÄISCHE PATENTSCHRIFT

(11) **EP 2 900 452 B1**
(45) Veröffentlichungstag und Bekanntmachung des Hinweises auf die Patenterteilung: **20.12.2017**
(21) Anmeldenummer: 13758798.6
(22) Anmeldetag: 28.08.2013
(51) Int. Cl.: B29C 47/10, B29C 47/68, B01D 46/40, B29C 47/08

(54) **ZUFÜHRVORRICHTUNG ZUR ZUFÜHRUNG VON FASERN BEI DER HERSTELLUNG VON FASERVERSTÄRKTEN KUNSTSTOFFEN**
FEEDING DEVICE FOR SUPPLYING FIBERS DURING THE PRODUCTION OF FIBER-REINFORCED PLASTIC PARTS
DISPOSITIF D'ALIMENTATION POUR L'ACHEMINEMENT DE FIBRES LORS DE LA FABRICATION DE MATIÈRES PLASTIQUES RENFORCÉES DE FIBRES

(30) Priorität: 27.09.2012 DE 102012217579
(43) Veröffentlichungstag der Anmeldung: 05.08.2015
(73) Patentinhaber: SKZ-KFE gGmbH Kunststoff-Forschung und - Entwicklung, 97076 Würzburg (DE)
(72) Erfinder: HEIDEMEYER, Peter, 97318 Kitzingen (DE); DEUBEL, Christian, 97273 Kürnach (DE)
(74) Vertreter: Rau, Schneck & Hübner Patentanwälte Rechtsanwälte PartGmbB
(86) Internationale Anmeldenummer: PCT/EP2013/067825
(87) Internationale Veröffentlichungsnummer: WO 2014/048667

(56) Entgegenhaltungen:
- WO-A2-2012/093605
- DE-A1- 10 201 869
- DE-A1- 19 754 409
- DE-U1- 20 015 369
- DE-U1-202012 002 449
- US-A- 5 279 631

## Beschreibung

Die Erfindung betrifft eine Zuführvorrichtung zur Zuführung von Fasern bei der Herstellung von faserverstärkten Kunststoffen gemäß dem Oberbegriff des Anspruchs 1.

Aus der DE 102 01 869 A1 ist eine Zuführvorrichtung zur Zuführung von Schnipseln und Kurzschnittfasern in einen Extruder zur Herstellung von faserverstärkten Kunststoffen bekannt. Die Zuführung erfolgt über ein Rührwerk mittels eines Zweischneckenbeistellextruders, der seitlich in den Extruder mündet und die Kurzschnittfasern in den Extruder fördert. Die Kurzschnittfasern werden über ein Fallrohr und ein Rührwerk mittels eines Luftstroms in den Beistellextruder gesaugt. Hierzu mündet unterhalb der Schneckenwellen ein Gebläse in das Gehäuse des Beistellextruders, das den Faser-Luftstrom erzeugt. Durch ein Sieb wird der Faser-Luftstrom getrennt, wobei die Luft aus dem Gehäuse des Beistellextruders abgesaugt wird. Zur Reinigung des Siebes wird unterhalb von diesem über eine Leitung Druckluft zugeführt, wobei die Leitung in Richtung des Gebläses durch die zugeführte Druckluft mittels einer Rückschlagklappe verschließbar ist.

Aus der WO 2012/093 605 A2 ist eine Filtereinrichtung bekannt, die einen inneren Strömungskanal und diesen umgebende äußere Strömungskanäle ausbildet. Zwischen den äußeren Strömungskanälen und dem inneren Strömungskanal verlaufen in einer Querrichtung Strömungskanäle mit einem sich erweiternden Strömungsquerschnitt.

Aus der DE 197 54 409 A1 ist eine Vorrichtung für die kontinuierliche Aufgabe von Fasern in einen Extruder zur Herstellung faserverstärkter Kunststoffe bekannt.

Aus der DE 20 2012 002 449 U1 ist ein kerzenförmiger Filter bekannt, der mehrere übereinander angeordnete Lamellen aufweist. Die Lamellen begrenzen zwischen sich einen jeweiligen Strömungskanal, der sich in einer Strömungsrichtung verjüngt.

Aus der DE 200 15 369 U1 ist ein Filter mit einem trichterförmigen Filterkörper bekannt. Der Filterkörper verjüngt sich in einer Strömungsrichtung.

Der Erfindung liegt die Aufgabe zugrunde, eine Zuführvorrichtung der gattungsgemäßen Art derart weiterzubilden, dass eine einfachere und zuverlässigere Zuführung von Fasern in eine Aufbereitungsanlage zur Herstellung faserverstärkter Kunststoffe möglich ist. Insbesondere soll die Zuführvorrichtung eine vergleichsweise längere Standzeit aufweisen.

Diese Aufgabe wird durch eine Zuführvorrichtung mit den Merkmalen des Anspruchs 1 gelöst. Dadurch, dass die Strömungskanäle der Filtereinrichtung in der Strömungsrichtung einen sich erweiternden Strömungsquerschnitt aufweisen, wird ein Zusetzen der Filtereinrichtung wirkungsvoll verhindert. Fasern, die in einen der Strömungskanäle gesaugt werden, finden dort aufgrund des sich erweiternden Strömungsquerschnitts einen vergleichsweise geringen Halt, so dass diese aufgrund des Luftstroms durch den jeweiligen Strömungskanal gesaugt und über eine Saugleitung abgeführt werden. Diejenigen Fasern, die also in einen der Strömungskanäle gelangen, werden im Wesentlichen ungehindert durch die Filtereinrichtung abgesaugt. Hierdurch wird auf einfache und zuverlässige Weise ein Zusetzen der Filtereinrichtung verhindert. Die Abmessungen der Strömungskanäle sind auf die zu fördernden Fasern abgestimmt, so dass einerseits ein ausreichend hoher Luftstrom vorhanden ist und feine Staubpartikel durch die Filtereinrichtung abgesaugt werden, jedoch andererseits die zu fördernden Fasern im Normalfall nicht durch die Filtereinrichtung gelangen können. Die erfindungsgemäße Zuführeinrichtung ist einfach aufgebaut und weist aufgrund der Filtereinrichtung eine hohe Zuverlässigkeit und eine vergleichsweise lange Standzeit auf. Insbesondere kann auf Zusatzeinrichtungen zur Reinigung der Filtereinrichtung und/oder zum Einsaugen der Fasern, wie beispielsweise auf ein Rührwerk, verzichtet werden.

Die Zuführvorrichtung gewährleistet einen niedrigen Strömungswiderstand und eine vergleichsweise lange Standzeit der Filtereinrichtung. Dadurch, dass die Strömungskanäle spaltförmig ausgebildet sind, weisen diese eine vergleichsweise große Querschnittsfläche auf, wodurch ein kleiner Strömungswiderstand erzielt wird. Gleichzeitig wird durch den Verlauf der Strömungskanäle quer zu der Förderrichtung der Fasern ein Eintritt der Fasern in die Strömungskanäle erschwert.

Die Mehrwellen-Schneckenmaschine ist vorzugsweise als Doppelwellen-Schneckenmaschine mit gleichsinnig drehantreibbaren und einander dicht kämmenden Schneckenwellen ausgebildet. Mittels der Zuführeinrichtung sind Fasern in einem trockenen Zustand seitlich in eine Aufbereitungsanlage zur Herstellung von faserverstärkten Kunststoffen zuführbar. Die Aufbereitungsanlage ist beispielsweise als Schneckenmaschine, insbesondere als Einwellen- oder Mehrwellenschneckenmaschine, oder Spritzgießmaschine ausgebildet. Die erfindungsgemäße Zuführvorrichtung eignet sich insbesondere zur Zuführung von Langschnittfasern. Die zu fördernden Fasern bzw. Langschnittfasern weisen insbesondere eine Faserlänge von 2 mm bis 100 mm und insbesondere von 15 mm bis 50 mm auf. Die Mehrwellen-Schneckenmaschine ist insbesondere als zur seitlichen Beschickung der Aufbereitungsanlage ausgebildet.

Eine Zuführvorrichtung nach Anspruch 2 gewährleistet eine lange Standzeit der Filtereinrichtung. Fasern, die in einen der Strömungskanäle gelangen, können durch die stufenförmige Ausbildung im Wesentlichen ungehindert aus der Filtereinrichtung abgeführt werden.

Eine Zuführvorrichtung nach Anspruch 3 gewährleistet, dass einerseits Fasern im Normalfall nicht in einen der Strömungskanäle gelangen und andererseits der Strömungswiderstand der Filtereinrichtung für den Luftstrom vergleichsweise gering ist.

Eine Zuführvorrichtung nach Anspruch 4 gewährleistet, dass einerseits in einen der Strömungskanäle gelangende Fasern ungehindert aus der Filtereinrichtung abführbar sind und andererseits der für die Filtereinrichtung zur Verfügung stehende Bauraum optimal genutzt und ein vergleichsweise niedriger Strömungswiderstand für den Luftstrom erzielt wird.

Eine Zuführvorrichtung nach Anspruch 5 gewährleistet einen einfachen und modularen Aufbau der Filtereinrichtung. Die Filtereinrichtung ist aus einer Vielzahl gleichartig ausgebildeter Filterelemente aufgebaut, die zu der Filtereinrichtung zusammengefügt sind. Die Filterelemente bilden somit ein Filterpaket. Durch die Filterelemente kann in einfacher Weise eine Filtereinrichtung bzw. ein Filterpaket mit beliebiger Filterlänge ausgebildet werden. Die paketförmig angeordneten Filterelemente werden in eine Saugöffnung des Gehäuses der Mehrwellen-Schneckenmaschine eingebaut. Die Anzahl der Filterelemente richtet sich nach der benötigten Filterlänge und der Baugröße der Mehrwellen-Schneckenmaschine. Beispielsweise werden mindestens 10, insbesondere mindestens 20 und insbesondere mindestens 30 Filterelemente in der Förderrichtung nacheinander angeordnet.

Eine Zuführvorrichtung nach Anspruch 6 gewährleistet in einfacher Weise einen modularen Aufbau der Filtereinrichtung. Ein Filterelement liegt mit den mindestens zwei Abstandshaltern gegen die Grundplatte eines benachbarten Filterelements an, so dass zwischen dem Filtersteg des einen Filterelements und der Grundplatte des anderen Filterelements ein spaltförmiger erster Kanalabschnitt und zwischen den Grundplatten der benachbarten Filterelemente ein spaltförmiger zweiter Kanalabschnitt ausgebildet wird. Der erste Kanalabschnitt weist eine minimale erste Kanalbreite auf, die kleiner als eine minimale zweite Kanalbreite des zweiten Kanalabschnitts ist. Der Strömungsquerschnitt des zwischen den benachbarten Filterelementen gebildeten Strömungskanals erweitert sich somit in der Strömungsrichtung. Der Filtersteg weist vorzugsweise in der Förderrichtung eine Breite auf, die kleiner als 2,0 mm, insbesondere kleiner als 1,5 mm und insbesondere kleiner als 1,0 mm ist. Vorzugsweise weist der Filtersteg die Form von zwei Teilkreisbögen auf, die eine den Gehäusebohrungen entsprechende Kreisform aufweisen. Die jeweilige Grundplatte weist vorzugsweise in der Förderrichtung eine Breite auf, die kleiner als 1,5 mm, insbesondere kleiner als 1,0 mm und insbesondere kleiner als 0,5 mm ist. Hierdurch wird bei vergleichsweise kleinem Bauraum der Filtereinrichtung ein geringer Strömungswiderstand erzielt.

Eine Zuführvorrichtung nach Anspruch 7 gewährleitstet einen einfachen und zuverlässigen Aufbau der Filtereinrichtung. Dadurch, dass die Filtereinrichtung aus Metall ausgebildet ist bzw. die Filterelemente aus Metall ausgebildet sind, kann die Filtereinrichtung bzw. können die Filterelemente mit vergleichsweise geringen Wandstärken ausgebildet werden, so dass die Filtereinrichtung bei geringem Bauraum einen vergleichsweise geringen Strömungswiderstand aufweist. Darüber hinaus weist die Filtereinrichtung eine hohe Temperaturbeständigkeit auf. Das Metall ist insbesondere Stahl oder Aluminium.

Eine Zuführvorrichtung nach Anspruch 8 gewährleistet auf einfache Weise eine lange Standzeit der Filtereinrichtung. Dadurch, dass die Saugöffnung in der Förderrichtung versetzt zu der Zuführöffnung angeordnet ist, werden die Fasern beim Zuführen bereits in die Förderrichtung gelenkt, so dass ein Eintritt in einen der Strömungskanäle erschwert wird.

Eine Zuführvorrichtung nach Anspruch 9 gewährleistet auf einfache und zuverlässige Weise ein Fördern der eingesaugten Fasern in der Förderrichtung. Dadurch, dass die Filtereinrichtung in dem Gehäuse bzw. in der in dem Gehäuse ausgebildeten Saugöffnung angeordnet ist, begrenzt die Filtereinrichtung unmittelbar die Gehäusebohrungen. Dadurch, dass die Filtereinrichtung eine den Gehäusebohrungen entsprechende Querschnittsform aufweist, ist zwischen der Filtereinrichtung und den Schneckenwellen nur ein vergleichsweise kleiner Spalt ausgebildet, so dass die aufgrund der Ansaugung auf der Filtereinrichtung befindlichen Fasern durch die Schneckenwellen einfach und zuverlässig abgestreift und in der Förderrichtung von der Filtereinrichtung abtransportiert werden können. Vorzugsweise ist die Filtereinrichtung aus mehreren in der Fördereinrichtung nacheinander angeordneten Filterelementen aufgebaut, die jeweils einen Filtersteg mit der Querschnittsform der Gehäusebohrungen aufweisen.

Eine Zuführvorrichtung nach Anspruch 10 detektiert in zuverlässiger Weise ein Zusetzten der Filtereinrichtung. Wird die Filtereinrichtung aufgrund von Feinstaub und/oder eingesaugten Fasern zugesetzt, so ist mittels des Drucksensors ein verminderter Luftdruck in der Saugleitung detektierbar. Messwerte für den Luftdruck können mittels einer Steuereinrichtung ausgewertet werden, die im Falle eines verminderten Luftdrucks ein Warnsignal abgibt. Die Zuführvorrichtung kann dann in optimalen Zeitabständen gewartet werden.

Eine Zuführvorrichtung nach Anspruch 11 gewährleistet eine lange Lebensdauer der Saugeinrichtung. Aus der Filtereinrichtung abgeführte Fasern können nicht in die Saugeinrichtung gelangen, sondern werden vor der Saugeinrichtung mittels des Faserfilters ausgefiltert. Entsprechendes gilt für feine Staubpartikel. Der Faserfilter wird vorzugsweise in regelmäßigen Zeitabständen ausgewechselt, so dass ein Zusetzen des Faserfilters vermieden wird. Der Faserfilter kann beispielsweise Teil einer Filterwechseleinrichtung sein, in der zwei Faserfilter angeordnet sind, die in einfacher Weise gegeneinander wechselbar sind.

Eine Zuführvorrichtung nach Anspruch 12 gewährleistet in zuverlässiger Weise eine Detektion eines Kunststoffschmelze-Rückstaus aus der Aufbereitungsanlage. Der Überwachungssensor kann beispielsweise als Drucksensor und/oder als Temperatursensor und/oder als Drehmomentsensor und/oder als Strom- bzw. Leistungsaufnahmesensor ausgebildet sein.

Tritt Kunststoffschmelze aus der Aufbereitungsanlage durch die Austragsöffnung in die Gehäusebohrungen der Mehrwellen-Schneckenmaschine ein, so wird beispielsweise mittels des Überwachungssensors ein erhöhter Druck und/oder eine erhöhte Temperatur in den Gehäusebohrungen detektiert. Zusätzlich oder alternativ kann der Eintritt von Kunststoffschmelze in die Gehäusebohrungen durch eine direkte oder indirekte Messung des Drehmoments der Mehrwellen-Schneckenmaschine detektiert werden. Das Drehmoment kann beispielsweise direkt mittels eines Drehmomentssensors oder indirekt mittels eines Strom- bzw. Leistungsaufnahmesensors, der die aufgenommene Antriebsleistung der Mehrwellen-Schneckenmaschine erfasst, detektiert werden. Zusätzlich kann durch die Überwachung des Drehmoments die aktuell geförderte Fasermenge sowie die Konstanz der Förderung über die Dosierzeit überwacht werden. Darüber hinaus kann ein möglicher Faserstau in der Mehrwellen-Schneckenmaschine detektiert werden. Ein Rückstau der Kunststoffschmelze kann zuverlässig erkannt werden, so dass rechtzeitig bevor die Kunststoffschmelze die Filtereinrichtung erreicht Gegenmaßnahmen eingeleitet werden können.

Eine Zuführvorrichtung nach Anspruch 13 gewährleistet in einfacher und zuverlässiger Weise ein Einziehen der Fasern in die Mehrwellen-Schneckenmaschine. Durch das Einlaufelement bzw. dessen Einlaufgeometrie wird der Einzug von nicht rieselbaren und miteinander verhakten Fasern, die gewölleartig vorliegen, verbessert. Das Einlaufelement ist vorzugsweise auswechselbar an dem Gehäuse angeordnet, so dass der Winkel der Einlaufwand durch einen Austausch des Einlaufelements in einfacher Weise an die zu fördernden Fasern angepasst werden kann. Alternativ kann das Einlaufelement ein fester Teil des Gehäuses der Mehrwellen-Schneckenmaschine sein. Das Einlaufelement weist eine den Gehäusebohrungen entsprechende Querschnittsform auf. Die Einlaufwand bildet eine Einlaufschräge aus, die in der Förderrichtung bzw. im Längsschnitt betrachtet vorzugsweise geradlinig ausgebildet ist, so dass das Einlaufelement einen sich in der Förderrichtung verjüngenden Einzugskeil bzw. Einlaufskeils ausbildet. Die Einlaufschräge verläuft bündig mit den Gehäusebohrungen aus. Vorzugsweise weisen die Schneckenwellen im Einzugsbereich ein höheres Gangvolumen auf, wodurch das Einzugsverhalten verbessert wird. Hierdurch gelangen die Fasern leichter in den Schneckengang bzw. die Schneckenwellen und werden besser gefördert. Das höhere Gangvolumen wird beispielsweise durch eingängige Schneckenelemente mit einer Steigung von mindestens dem 1,2- bis 1,8-fachen des Schneckendurchmessers erzielt.

Eine Zuführvorrichtung nach Anspruch 14 gewährleistet in einfacher und zuverlässiger Weise das Dosieren und Zuführen von geschnittenen Fasern bzw. Schnittfasern mit einer einstellbaren Faserlänge. Hierdurch wird ein breiter Einsatzbereich der Zuführvorrichtung gewährleistet. Insbesondere kann durch die direkte Zuführung der Schnittfasern in die Mehrwellen-Schneckenmaschine mittels der Schneideinrichtung auf ein Rührwerk verzichtet werden. Prinzipiell kann die Schneideinrichtung beliebig ausgebildet sein, solange diese ein definiertes Schneiden bzw. Brechen von Endlosfasern mit einer vordefinierten Faserlänge ermöglicht.

Weitere Merkmale, Vorteile und Einzelheiten der Erfindung ergeben sich aus der nachfolgenden Beschreibung eines Ausführungsbeispiels. Es zeigen:
- Fig. 1: eine schematische Ansicht einer Zuführvorrichtung zur Zuführung von Fasern in eine Aufbereitungsanlage zur Herstellung von faser-verstärkten Kunststoffen,

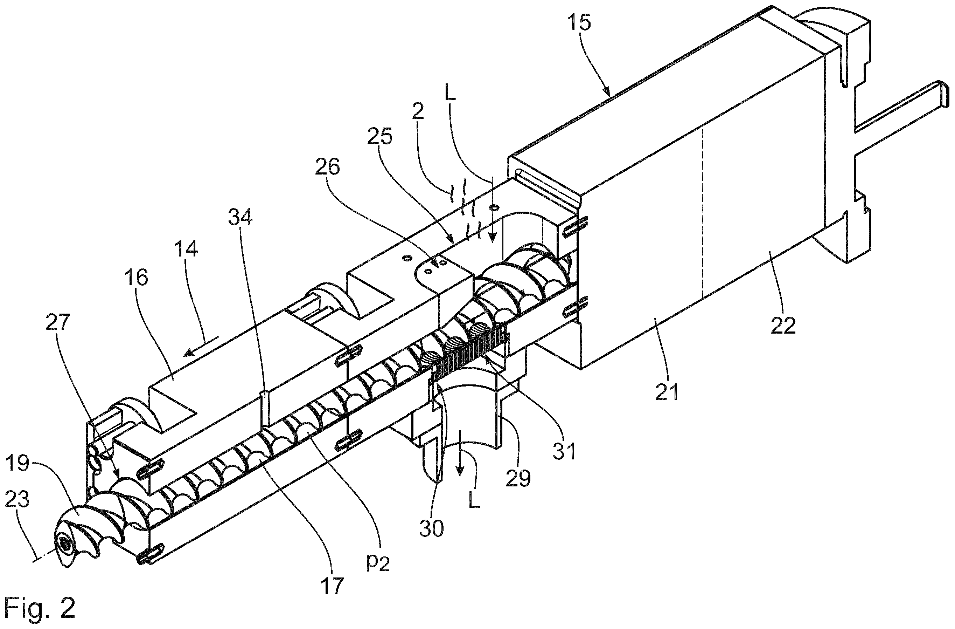

- Fig. 2: einen perspektivischen Längsschnitt durch eine Doppelwellen-Schneckenmaschine der Zuführvorrichtung in Fig. 1,

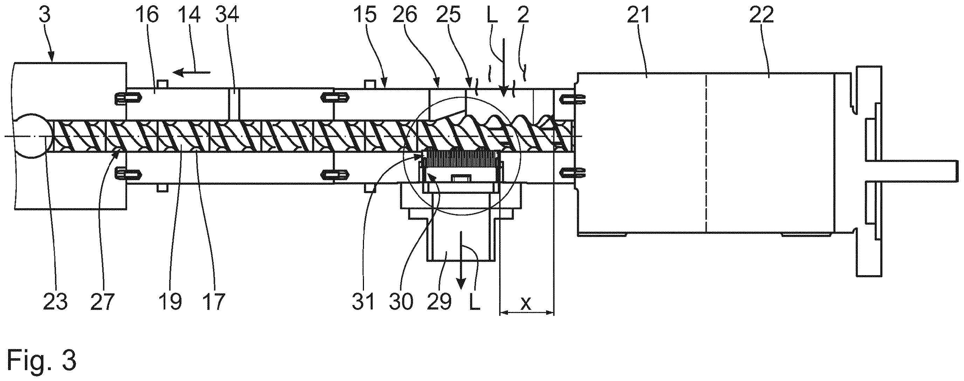

- Fig. 3: eine Seitenansicht des Längsschnitts in Fig. 2,

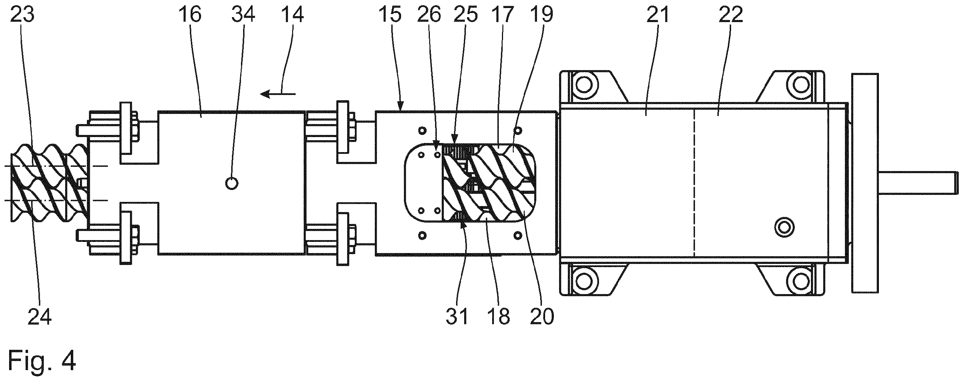

- Fig. 4: eine Draufsicht auf die Doppelwellen-Schneckenmaschine in Fig. 2,

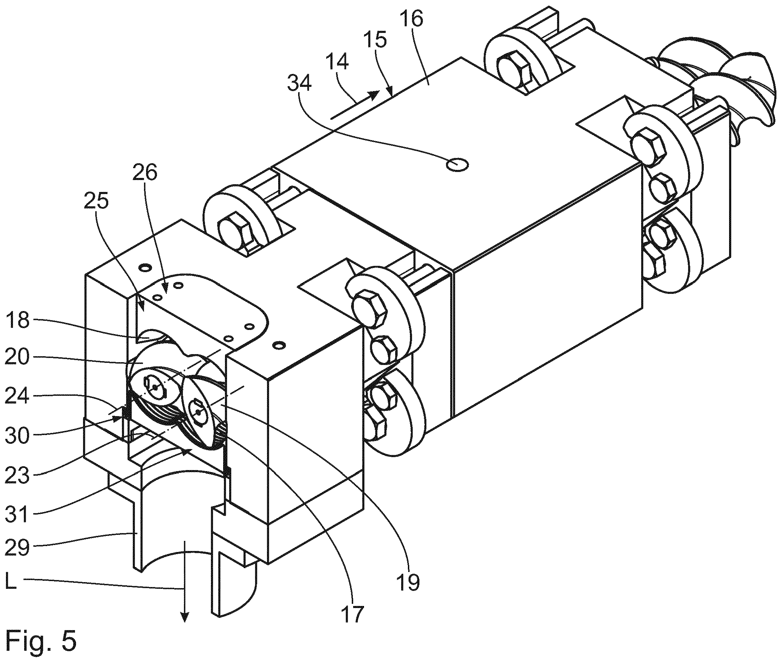

- Fig. 5: einen perspektivischen Querschnitt durch die Doppelwellen-Schneckenmaschine in Fig. 2 im Bereich einer Filtereinrichtung,

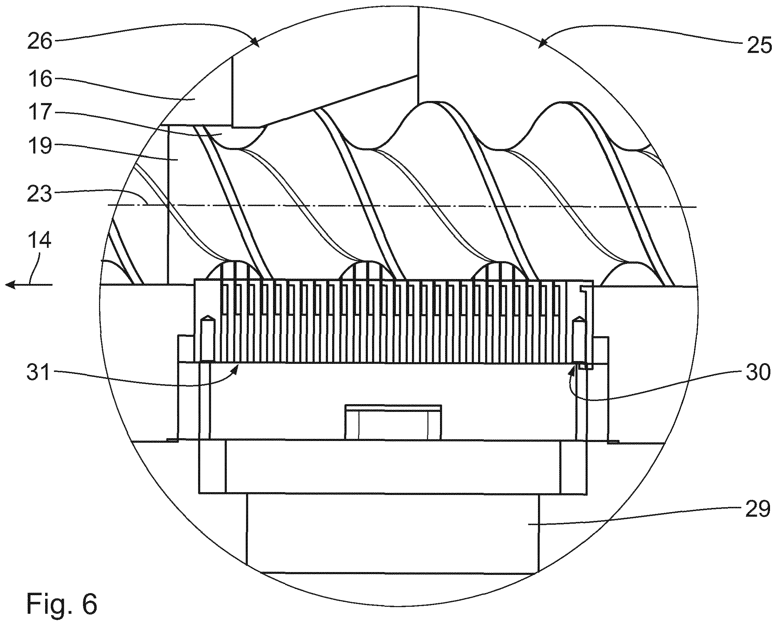

- Fig. 6: eine vergrößerte Seitenansicht der Doppelwellen-Schneckenmaschine in Fig. 3 im Bereich der Filtereinrichtung,

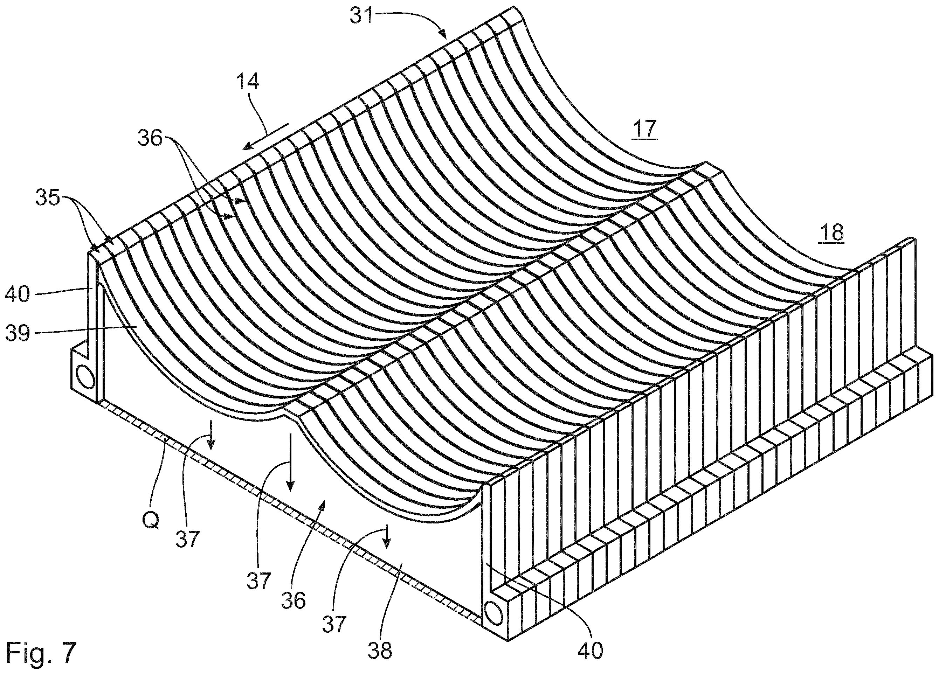

- Fig. 7: eine perspektivische Ansicht der aus mehreren Filterelementen aufgebauten Filtereinrichtung,

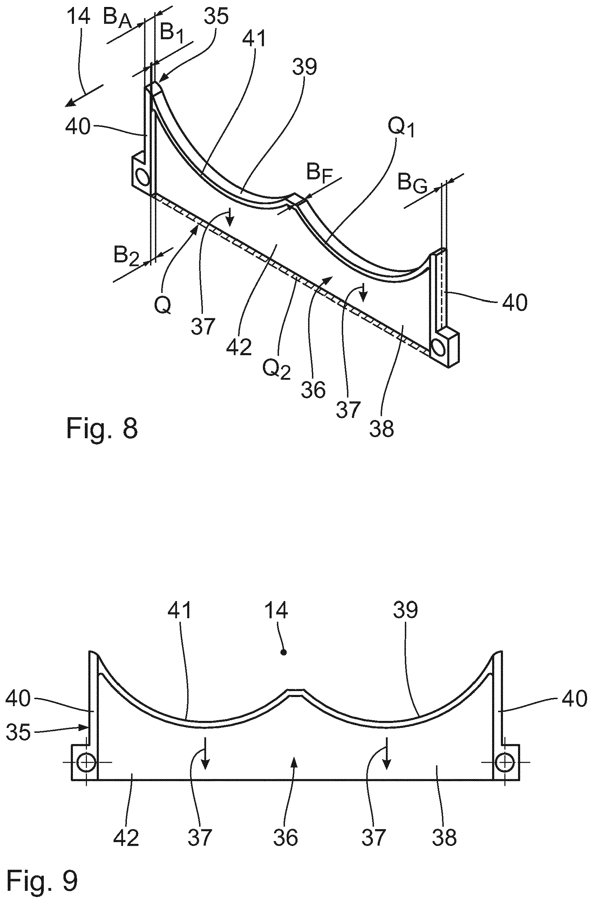

- Fig. 8: eine perspektivische Ansicht eines Filterelements in Fig. 7,
- Fig. 9: eine Frontansicht des Filterelements in Fig. 8,

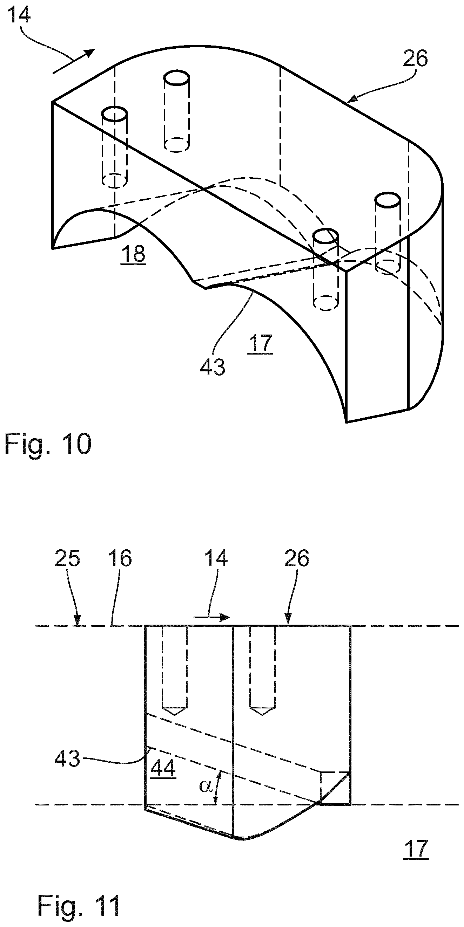

- Fig. 10: eine perspektivische Ansicht eines Einlaufelements der Doppel-wellen-Schneckenmaschine in Fig. 2, und
- Fig. 11: eine Seitenansicht des Einlaufelements in Fig. 10.

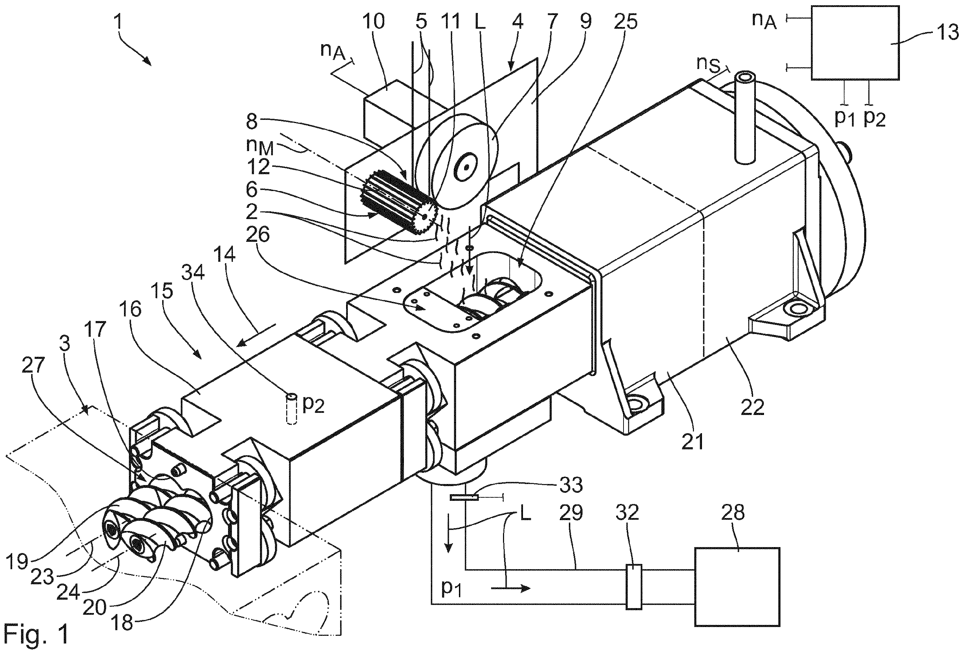

Eine in Fig. 1 insgesamt dargestellte Zuführvorrichtung 1 dient zur Zuführung von geschnittenen Fasern 2 in eine Aufbereitungsanlage 3, die wiederum zur Herstellung von faserverstärkten Kunststoffen dient. Die Aufbereitungsanlage 3 ist beispielsweise als Doppelschneckenextruder oder als Spritzgießmaschine oder als eine beliebige andere Kunststoffaufbereitungsmaschine ausgebildet. Die Zuführvorrichtung 1 ist zur Zuführung der Fasern 2 seitlich an der Aufbereitungsanlage 3 befestigt.

Die Zuführvorrichtung 1 weist eine Schneideinrichtung 4 auf, die zum Schneiden von Endlosfasern 5 dient. Durch das Schneiden der Endlosfasern 5 werden die geschnittenen Fasern 2 erzeugt. Die Schneideinrichtung 4 weist zum Schneiden der Endlosfasern 5 ein Schneidelement 6 und ein Anpresselement 7 auf, die rollenförmig ausgebildet sind und einen Spalt 8 begrenzen. Das Schneidelement 6 und das Anpresselement 7 sind drehbar an einem Grundgestell 9 gelagert, wobei das Anpresselement 7 mittels eines zugehörigen Antriebsmotors 10 drehantreibbar ist. Zum Schneiden der Endlosfasern 5 weist das Schneidelement 6 einen walzenförmigen Grundkörper 11 auf, an dem über den Umfang verteilt mehrere Schneidmesser 12 befestigt sind. Der Antriebsmotor 10 wird mittels einer Steuereinrichtung 13 angesteuert, so dass die Antriebsdrehzahl n_{A} einstellbar ist. Das Schneidelement 6 liegt gegen das Anpresselement 7 an, so dass dieses bei einer Rotation des Anpresselements 7 mit einer der Antriebsdrehzahl n_{A} entsprechenden Drehzahl n_{M} mitrotiert. Hierdurch ist die Menge der erzeugten Fasern 2 einstellbar bzw. dosierbar. Über die Anzahl bzw. den Abstand der Schneidmesser 12 ist die Faserlänge der Fasern 2 einstellbar. Vorzugsweise werden mittels der Schneideinrichtung 4 Fasern 2 mit einer Faserlänge von 2 mm bis 100 mm, insbesondere von 15 mm bis 50 mm erzeugt. Die Endlosfasern 5 werden der Schneideinrichtung 4 über eine nicht näher dargestellte Spule bzw. Spulen zugeführt. Der Anpressdruck zwischen dem Schneidelement 6 und dem Anpresselement 7 ist einstellbar, indem das Schneidelement 6 relativ zu dem Anpresselement 7 verlagerbar ist. Hierdurch können mehrere Endlosfasern 5 gleichzeitig geschnitten werden, insbesondere dann, wenn die Strecke zwischen den Faserrovings bzw. Spulen und der Schneideinrichtung 4 vergleichsweise lang ist.

Der Schneideinrichtung 4 ist eine Zweiwellen-Schneckenmaschine 15 nachgeordnet. Die Zweiwellen-Schneckenmaschine 15 definiert eine Förderrichtung 14 der Fasern 2. Die Zweiwellen-Schneckenmaschine 15 dient zur seitlichen Zuführung der Fasern 2 in die Aufbereitungsanlage 3 und wird dementsprechend auch als Seitenbeschickungsmaschine bezeichnet. Die Schneckenmaschine 15 weist ein Gehäuse 16 auf, in dem eine erste Gehäusebohrung 17 und eine diese durchdringende zweite Gehäusebohrung 18 ausgebildet ist. Die Gehäusebohrungen 17, 18 verlaufen parallel zueinander. Alternativ können die Gehäusebohrungen 17, 18 konisch zueinander verlaufen. In den Gehäusebohrungen 17, 18 ist jeweils eine zugehörige Schneckenwelle 19 bzw. 20 konzentrisch zu der Gehäusebohrung 17 bzw. 18 angeordnet. Die Schneckenwellen 19, 20 sind über ein Verzweigungsgetriebe 21 mittels eines Antriebsmotors 22 gleichsinnig, also in gleichen Drehrichtungen um eine jeweils zugehörige Drehachse 23 bzw. 24 drehantreibbar. Die Drehzahl n_{S} der Schneckenwellen 19, 20 ist mittels der Steuereinrichtung 13 einstellbar.

Zum Zuführen der mittels der Schneideinrichtung 4 geschnittenen Fasern 2 ist an einer der Schneideinrichtung 4 zugewandten Oberseite des Gehäuses 16 eine Zuführöffnung 25 ausgebildet. Die Zuführöffnung 25 ist in der Förderrichtung 14 durch ein Einlaufelement 26 begrenzt. Das Einlaufelement 26 ist nachfolgend noch genauer beschrieben. Zum Austragen der Fasern 2 aus der Schneckenmaschine 15 bilden die Gehäusebohrungen 17, 18 stirnseitig an dem Gehäuse 16 eine Austragsöffnung 27 aus.

Zum Einsaugen der Fasen 2 in die Schneckenmaschine 15 weist die Zuführvorrichtung 1 eine Saugeinrichtung 28 auf. Die Saugeinrichtung 28 ist über eine Saugleitung 29 mit einer Saugöffnung 30 verbunden, die in dem Gehäuse 16 ausgebildet ist. Die Saugeinrichtung 28 und die Saugleitung 29 sind in Fig. 1 lediglich schematisch dargestellt.

Die Saugöffnung 30 ist an einer der Zuführöffnung 25 gegenüberliegenden Unterseite des Gehäuses 16 ausgebildet und ist in der Förderrichtung 14 bzw. in Richtung der Drehachsen 23, 24 um einen Abstand x versetzt zu der Zuführöffnung 25 angeordnet. Mittels der Saugeinrichtung 28 ist ein Luftstrom L erzeugbar, der durch die Zuführöffnung 25, die Gehäusebohrungen 17, 18, die Saugöffnung 30 und die Saugleitung 29 verläuft. Um einen Eintritt der mittels des Luftstroms L angesaugten Fasern 2 in die Saugleitung 29 zu verhindern, ist in der Saugöffnung 30 eine Filtereinrichtung 31 zum Ausfiltern der Fasern 2 aus dem Luftstrom L angeordnet. Die Filtereinrichtung 31 ist nachfolgend noch im Detail beschrieben.

Zum Schutz der Saugeinrichtung 28 vor Fasern 2, die durch die Filtereinrichtung 31 in die Saugleitung 29 gelangen, ist in der Saugleitung 29 ein Faserfilter 32 angeordnet. Der Faserfilter 32 ist einfach auswechselbar und ist insbesondere Teil einer nicht näher dargestellten Filterwechseleinrichtung, die durch einfache lineare Verschiebung einen Wechsel eines Faserfilters 32 durch einen neuen Faserfilter 32 ermöglicht. Um ein Zusetzen der Filtereinrichtung 31 und/oder des Faserfilters 32 zu detektieren, ist in der Saugleitung 29 ein erster Drucksensor 33 zur Überwachung des Luftdrucks p₁ zwischen der Filtereinrichtung 31 und dem Faserfilter 32 angeordnet. Der Drucksensor 33 ist in Signalverbindung mit der Steuereinrichtung 13, die die Messwerte für den Luftdruck p₁ auswertet. Darüber hinaus ist in dem Gehäuse 16 zwischen der Austragsöffnung 27 und der Filtereinrichtung 31 ein zweiter Drucksensor 34 bzw. ein Überwachungssensor angeordnet, der den Druck p₂ in den Gehäusebohrungen 17, 18 misst. Der zweite Drucksensor 34 ist in Signalverbindung mit der Steuereinrichtung 13, die die Messwerte für den Druck p₂ auswertet. Der zweite Drucksensor 34 dient zur Detektierung eines Rückstaus des in der Aufbereitungsanlage 3 befindlichen Kunststoffs durch die die Austragsöffnung 27 entgegen der Förderrichtung 14 in die Gehäusebohrungen 17, 18.

Die Filtereinrichtung 31 ist aus mehreren gleichartigen Filterelementen 35 aufgebaut, die in der Förderrichtung 14 bzw. in Richtung der Drehachsen 23, 24 nacheinander angeordnet sind. Die Filterelemente 35 sind aus einem Metall ausgebildet, vorzugsweise aus Stahl oder Aluminium. Jeweils zwei benachbarte Filterelemente 35 begrenzen einen spaltförmigen Strömungskanal 36, dessen Querschnitt im Wesentlichen quer zu der Förderrichtung 14 verläuft. Das in der Förderrichtung 14 letzte Filterelement 35 begrenzt mit dem Gehäuse 16 einen entsprechenden Strömungskanal 36. Die Strömungskanäle 36 weisen in einer senkrecht zu der Förderrichtung 14 verlaufenden Strömungsrichtung 37 einen sich erweiternden Strömungsquerschnitt Q auf.

Jedes der Filterelemente 35 weist zur Ausbildung des zugehörigen Strömungskanals 36 eine Grundplatte 38 auf, an der an einer den Gehäusebohrungen 17, 18 zugewandten Seite ein Filtersteg 39 und seitlich davon zwei Abstandshalter 40 angeordnet sind. Der Filtersteg 39 verläuft zur Ausbildung des spaltförmigen Strömungskanals 36 quer zu der Förderrichtung 14. Um ein sauberes Abstreifen der Fasern 2 von der Filtereinrichtung 31 bzw. den Filterstegen 39 zu ermöglichen, weisen die Filterstege 39 sowie die Grundplatten 38 eine den Gehäusebohrungen 17, 18 entsprechende Querschnittsform auf. Die Abstandshalter 40 sind stegförmig ausgebildet und seitlich an dem zugehörigen Filtersteg 39 angeordnet, so dass diese in der Strömungsrichtung 37 verlaufen und den zugehörigen Strömungskanal 36 seitlich begrenzen. Die Abstandshalter 40 weisen in der Förderrichtung 14 eine Breite B_{A} auf, die größer als eine Breite B_{F} des zugehörigen Filterstegs 39 und größer als eine Breite B_{G} der zugehörigen Grundplatte 38 in der Förderrichtung 14 ist. Liegt ein Filterelement 35 mit seinen Abstandshaltern 40 gegen die Grundplatte 38 eines benachbarten Filterelements 35 an, so wird hierdurch der zugehörige Strömungskanal 36 ausgebildet.

Dadurch, dass die Breite B_{F} des Filterstegs 39 größer als die Breite B_{G} der Grundplatte 38 ist, erweitert sich der Strömungsquerschnitt Q des jeweiligen Strömungskanals 36 in der Strömungsrichtung 37 stufenförmig. Der jeweilige Strömungskanal 36 weist einen ersten Kanalabschnitt 41 auf, dessen Querschnitt Q₁ von dem Filtersteg 39 und den Abstandshaltern 40 sowie der Grundplatte 38 des benachbarten Filterelements 35 begrenzt wird. Der erste Kanalabschnitt 41 weist in der Förderrichtung 14 eine minimale erste Kanalbreite B₁ auf, die sich aus der Differenz zwischen den Breiten B_{A} und B_{F} ergibt. Für die Kanalbreite B₁ gilt: 0,01 mm ≤ B₁ ≤ 0,4 mm und insbesondere 0,05 mm ≤ B₁ ≤ 0,2 mm. Dem ersten Kanalabschnitt 41 ist in der Strömungsrichtung 37 ein zweiter Kanalabschnitt 42 nachgeordnet, der eine minimale zweite Kanalbreite B₂ aufweist, die sich aus der Differenz zwischen den Breiten B_{A} und B_{G} ergibt. Für die zweite Kanalbreite B₂ gilt: 0,5 mm ≤ B₂ ≤ 3,0 mm und insbesondere 0,8 mm ≤ B₂ ≤ 2,0 mm. Der Querschnitt Q₂ des zweiten Kanalabschnitts 42 wird durch die Grundplatte 38 und die Abstandshalter 40 eines Filterelements 35 und die Grundplatte 38 des benachbarten Filterelements 35 begrenzt. Für die Breite B_{G} gilt: B_{G} ≤ 1,5 mm, insbesondere B_{G} ≤ 1,0 mm und insbesondere B_{G} ≤ 0,5 mm.

Das Einlaufelement 26 dient zur Verbesserung des Einzugsverhaltens der Schneckenmaschine 15. Das Einlaufelement 26 weist eine den Gehäusebohrungen 17, 18 zugewandte Einlaufwand 43 auf. Die Einlaufwand 43 bildet - in einem Vertikallängsschnitt parallel zu den Drehachsen 23 bzw. 24 betrachtet - eine geradlinig verlaufende Einlaufschräge aus. Die Einlaufwand 43 schließt mit der Förderrichtung 14 - in dem Vertikallängsschnitt betrachtet - einen Winkel α ein für den gilt: 5° ≤ α ≤ 20°. Das Einlaufelement 26 bildet somit im Bereich der Einlaufwand 43 einen Einlaufkeil 44 aus, der sich in der Förderrichtung 14 verjüngt. Im Querschnitt betrachtet weist die Einlaufwand 43 eine den Gehäusebohrungen 17, 18 entsprechende Querschnittsform auf, so dass die Einlaufwand 43 bündig mit den Gehäusebohrungen 17, 18 ausläuft. Das Einlaufelement 26 ist auswechselbar an dem Gehäuse 16 befestigt.

Die Funktionsweise der Zuführvorrichtung 1 ist wie folgt:
Die bereitgestellten Endlosfasern 5 werden zunächst mittels der Schneideeinrichtung 4 zu Fasern 2 mit einer gewünschten Faserlänge geschnitten.
Die Faserlänge beträgt vorzugsweise zwischen 2 mm und 100 mm und insbesondere zwischen 5 mm und 50 mm. Durch die Drehzahlen n_{A} bzw. n_{M} ist eine Dosierung der Fasern 2 möglich. Die geschnittenen Fasern 2 werden von dem Luftstrom L, der mittels der Saugeinrichtung 28 erzeugt wird, durch die Zuführöffnung 25 in die Gehäusebohrungen 17, 18 eingesaugt.

Der Luftstrom L verläuft durch die Zuführöffnung 25, die Gehäusebohrungen 17, 18, die in der Saugöffnung 30 angeordnete Filtereinrichtung 31, die Saugleitung 29 und den Faserfilter 32 zu der Saugeinrichtung 28. Dadurch, dass die Saugöffnung 30 um den Abstand x versetzt zu der Zuführöffnung 25 angeordnet ist, werden die von dem Luftstrom L mitgenommenen Fasern 2 beim Einsaugen bereits in die Förderrichtung 14 umgelenkt. Aufgrund der von der Einlaufwand 43 ausgebildeten Einlaufschräge können Fasern 2 frühzeitig in die Förderrichtung 14 umgelenkt und von den Schneckenwellen, 19, 20 erfasst und in Richtung der Austragsöffnung 27 gefördert werden. Die übrigen Fasern 2 werden an den Schneckenwellen 19, 20 vorbei zu der Filtereinrichtung 31 gesaugt, wo die Fasern 2 von dem Luftstrom L abgetrennt werden. Die auf der Filtereinrichtung 31 zu liegen kommenden Fasern 2 werden aufgrund der den Gehäusebohrungen 17, 18 entsprechenden Querschnittsform der Filtereinrichtung 31 von dieser durch die Schneckenwellen 19, 20 abgestreift und in der Förderrichtung 14 abtransportiert. Hierzu weisen die Schneckenwellen 19, 20 in einem als Einzugsbereich bezeichneten Bereich zwischen der Zuführöffnung 25 und dem in der Förderrichtung 14 liegenden Ende der Filtereinrichtung 31 eine im Vergleich zum restlichen Teil der Schneckenwellen 19, 20 höheres Gangvolumen auf. Die Fasern 2 gelangen so leichter in die Schneckengänge und werden besser in der Förderrichtung 14 gefördert. Das höhere Gangvolumen wird beispielsweise durch eingängige Schneckenelemente mit einer Steigung von mindestens dem 1,2- bis 1,8-fachen des Schneckendurchmessers erreicht. Durch den Luftstrom L bzw. die Saugförderung werden die leichten, nicht rieselfähigen und vergleichsweise langen Fasern 2 unter die Schneckenwellen 19, 20 gesaugt, wodurch die Fasern 2 von den Schneckenwellen 19, 20 erfasst und gefördert werden können.

Aufgrund der Ausbildung der Strömungskanäle 36 wird ein Zusetzen der Filtereinrichtung 31 wirkungsvoll verhindert, so dass die Filtereinrichtung 31 robust und zuverlässig ist und eine lange Standzeit aufweist. Dadurch, dass die spaltförmigen Strömungskanäle 36 im Querschnitt quer zu der Förderrichtung 14 verlaufen, sind die Fasern 2 mit ihrer Faserlänge in Richtung der minimalen Kanalbreite B₁ der ersten Kanalabschnitte 41 orientiert. Hierdurch wird die Wahrscheinlichkeit erniedrigt, dass eine Faser 2 in den ersten Kanalabschnitt 41 eintritt. Fasern 2, die dennoch in einen der ersten Kanalabschnitte 41 eintreten, können aufgrund des breiteren zweiten Kanalabschnitts 42 aus dem ersten Kanalabschnitt 41 abgesaugt und aus der Filtereinrichtung 31 abgeführt werden. Ein Zusetzen der Filtereinrichtung 31 wird somit verhindert. Die durch die Filtereinrichtung 31 durchgesaugten Fasern 2 werden mittels des Faserfilters 32 aus dem Luftstrom L ausgefiltert.

Der Drucksensor 33 misst den Luftdruck p₁ in der Saugleitung 29 und übermittelt die Messwerte an die Steuereinrichtung 13, die diese auswertet. Nimmt der Luftdruck p₁ in der Saugleitung 29 zu, so erkennt die Steuereinrichtung 13, dass der Faserfilter 32 einen vergleichsweise hohen Strömungswiderstand aufweist und ausgewechselt werden muss. Die Steuereinrichtung 13 ergibt ein entsprechendes Überwachungssignal ab. Nimmt der Luftdruck p₁ in der Saugleitung 29 demgegenüber ab, so erkennt die Steuereinrichtung 13, dass die Filtereinrichtung 31 einen vergleichsweise hohen Strömungswiderstand aufweist und gewartet werden muss. Die Steuereinrichtung 13 gibt in diesem Fall ein entsprechendes Überwachungssignal ab. Der Drucksensor 34 misst den Druck p₂ in den Gehäusebohrungen 17, 18. Tritt Kunststoffmaterial aus der Aufbereitungsanlage 3 durch die Austragsöffnung 27 entgegen der Förderrichtung 14 in die Gehäusebohrungen 17, 18 ein, so besteht die Gefahr, dass das Kunststoffmaterial bzw. die Kunststoffschmelze die Filtereinrichtung 31 verstopft. Die Steuereinrichtung 13 wertet die Messwerte des Drucks p₂ aus und erkennt, wenn Kunststoff bis zu der Position des Drucksensors 34 gelangt ist. Die Steuereinrichtung 13 gibt in diesem Fall ein entsprechendes Warnsignal ab. Ein Bediener kann aufgrund des Warnsignals Gegenmaßnahmen einleiten.

Durch die erfindungsgemäße Zuführvorrichtung 1 können Fasern 2 bzw. Schnittfasern mit einer einstellbaren Faserlänge mittels der Schneideinrichtung 4 erzeugt und trocken, also ohne plastifizierten Kunststoff, über die Zweiwellen-Schneckenmaschine 15 einer schmelzeführenden bzw. kunststoffführenden Aufbereitungsanlage 3 definiert zugeführt werden. Die Aufbereitungsanlage 3 ist beispielsweise als Einschnecken- oder Doppelschneckenmaschine, insbesondere als Extruder oder Spritzgießmaschine ausgebildet. Die der Aufbereitungsanlage 3 zugeführten Fasern 2 können auf diese Weise direkt in ein Kunststoffmaterial bzw. Matrixpolymer eingearbeitet werden, um Granulate, Halbzeuge und/oder Formteile in einem nachgeordneten Fertigungsschritt herzustellen. Bei den Fasern 2 handelt es sich um Verstärkungsfasern, wie beispielsweise Kohlefasern, Kunststofffasern, Glasfasern und/oder Naturfasern. Mit der erfindungsgemäßen Zuführvorrichtung 1 ist insbesondere eine Zuführung von langen Schnittfasern möglich, die eine sehr geringe Schüttdichte und eine nur schlechte bis keine Rieselfähigkeit aufweisen und dementsprechend schwierig zu dosieren, einzuziehen und zu fördern sind. Die Zuführeinrichtung 1 ist für Aufbereitungsanlagen 3 geeignet, die kontinuierlich betrieben werden, wie beispielsweise Extrusions- bzw. Compoundierungslagen oder die diskontinuierlich betrieben werden, wie beispielsweise Spritzgießmaschinen.

## Patentansprüche

1. Zuführvorrichtung zur Zuführung von Fasern bei der Herstellung von faserverstärkten Kunststoffen, umfassend
- eine Mehrwellen-Schneckenmaschine (15) zur seitlichen Zuführung von Fasern (2) in eine Aufbereitungsanlage (3) zur Herstellung von faserverstärkten Kunststoffen mit
-- einem Gehäuse (16),
-- mehreren einander durchdringenden Gehäusebohrungen (17, 18),
-- mehreren in den Gehäusebohrungen (17, 18) konzentrisch angeordneten und um zugehörige Drehachsen (23, 24) drehantreibbaren Schneckenwellen (19, 20), und
-- einer Zuführöffnung (25) zur Zuführung der Fasern (2) in die Gehäusebohrungen (17, 18),
- eine Saugeinrichtung (28) zum Einsaugen der Fasern (2) durch die Zuführöffnung (25) in die Gehäusebohrungen (17, 18) mittels eines Luftstroms (L), und
- eine zwischen der Saugeinrichtung (28) und den Gehäusebohrungen (17, 18) angeordnete Filtereinrichtung (31) zum Ausfiltern der Fasern (2) aus dem Luftstrom (L),
**dadurch gekennzeichnet,**
**dass** die Filtereinrichtung (31) mehrere Strömungskanäle (36) ausbildet, die in einer Strömungsrichtung (37) einen sich erweiternden Strömungsquerschnitt (Q) aufweisen, und
**dass** die Strömungskanäle (36) jeweils spaltförmig ausgebildet sind und quer zu einer Förderrichtung (14) der Mehrwellen-Schneckenmaschine (15) verlaufen.

2. Zuführvorrichtung nach Anspruch 1, **dadurch gekennzeichnet,**
**dass** die Strömungskanäle (36) sich jeweils stufenförmig erweitern.

3. Zuführvorrichtung nach Anspruch 1 oder 2, **dadurch gekennzeichnet, dass** die Strömungskanäle (36) jeweils einen ersten Kanalabschnitt (41) mit einer minimalen ersten Kanalbreite B₁ aufweisen, wobei gilt: 0,01 mm ≤ B₁ ≤ 0,4 mm und insbesondere 0,05 mm ≤ B₁ ≤ 0,2 mm.

4. Zuführvorrichtung nach einem der Ansprüche 1 bis 3, **dadurch gekennzeichnet,**
**dass** die Strömungskanäle (36) jeweils einen ersten Kanalabschnitt (41) und einen in der Strömungsrichtung (37) nachgeordneten zweiten Kanalabschnitt (42) mit einer minimalen zweiten Kanalbreite B₂ aufweisen, wobei gilt: 0,5 mm ≤ B₂ ≤ 3,0 mm und insbesondere 0,8 mm ≤ B₂ ≤ 2,0 mm.

5. Zuführvorrichtung nach einem der Ansprüche 1 bis 4, **dadurch gekennzeichnet,**
**dass** die Filtereinrichtung (31) mehrere aneinander anliegende Filterelemente (35) aufweist und benachbarte Filterelemente (35) jeweils einen spaltförmigen Strömungskanal (36) ausbilden.

6. Zuführvorrichtung nach Anspruch 5, **dadurch gekennzeichnet,**
**dass** die Filterelemente (35) jeweils eine Grundplatte (38) aufweisen, an der mindestens ein quer zu der Strömungsrichtung (37) verlaufender Filtersteg (39) und mindestens zwei Abstandshalter (40) angeordnet sind, und
**dass** die mindestens zwei Abstandshalter (40) zur Ausbildung eines Strömungskanals (36) eine größere Breite (B_{A}) als der mindestens eine Filtersteg (39) aufweisen.

7. Zuführvorrichtung nach einem der Ansprüche 1 bis 6, **dadurch gekennzeichnet,**
**dass** die Filtereinrichtung (31) aus einem Metall ausgebildet ist.

8. Zuführvorrichtung nach einem der Ansprüche 1 bis 7, **dadurch gekennzeichnet,**
**dass** in dem Gehäuse (16) eine Saugöffnung (30) ausgebildet ist, die in einer Förderrichtung (14) der Mehrwellen-Schneckenmaschine (15) versetzt zu der Zuführöffnung (25) angeordnet ist.

9. Zuführvorrichtung nach einem der Ansprüche 1 bis 8, **dadurch gekennzeichnet,**
**dass** die Filtereinrichtung (31) in dem Gehäuse (16), insbesondere in der Saugöffnung (30) angeordnet ist und im Bereich der Gehäusebohrungen (17, 18) eine diesen entsprechende Querschnittsform aufweist.

10. Zuführvorrichtung nach einem der Ansprüche 1 bis 9, **dadurch gekennzeichnet,**
**dass** in einer zwischen der Filtereinrichtung (31) und der Saugeinrichtung (28) verlaufenden Saugleitung (29) ein Drucksensor (33) zur Überwachung des Luftdrucks (p₁) angeordnet ist.

11. Zuführvorrichtung nach einem der Ansprüche 1 bis 10, **dadurch gekennzeichnet,**
**dass** in einer zwischen der Filtereinrichtung (31) und der Saugeinrichtung (28) verlaufenden Saugleitung (29) ein Faserfilter (32) angeordnet ist.

12. Zuführvorrichtung nach einem der Ansprüche 1 bis 11, **dadurch gekennzeichnet,**
**dass** ein Überwachungssensor (34) zur Überwachung eines Kunststoffschmelze-Rückstaus vorgesehen ist.

13. Zuführvorrichtung nach einem der Ansprüche 1 bis 12, **dadurch gekennzeichnet,**
**dass** die Zuführöffnung (25) in einer Förderrichtung (14) der Mehrwellen-Schneckenmaschine (15) durch ein Einlaufelement (26) begrenzt wird, das eine Einlaufwand (43) mit einem Winkel α relativ zu der Förderrichtung (14) ausbildet, wobei gilt: 5° ≤ α ≤ 20°.

14. Zuführvorrichtung nach einem der Ansprüche 1 bis 13, **dadurch gekennzeichnet,**
**dass** der Mehrwellen-Schneckenmaschine (15) eine Schneideinrichtung (4) zum Schneiden von Endlosfasern (5) in Fasern (2) mit einstellbarer Faserlänge vorgeordnet ist.

## Claims

1. Feed device for feeding fibers during the production of fiber-reinforced plastics materials, comprising
- a multi-shaft screw machine (15) for laterally feeding fibers (2) into a preparation system (3) for producing fiber-reinforced plastics materials with
-- a housing (16),
-- a plurality of housing bores (17, 18) penetrating one another,
-- a plurality of screw shafts (19, 20), which are concentrically arranged in the housing bores (17, 18) and are rotatably drivable about associated rotational axes (23, 24), and
-- a feed opening (25) for feeding the fibers (2) into the housing bores (17, 18),
- a suction mechanism (28) for sucking the fibers (2) through the feed opening (25) into the housing bores (17, 18) by means of an airstream (L), and
- a filter mechanism (31) arranged between the suction mechanism (28) and the housing bores (17, 18) to filter the fibers (2) out of the airstream (L),
**characterized**
**in that** the filter mechanism (31) forms a plurality of flow channels (36), which, in a flow direction (37), have a widening flow cross section (Q), and
**in that** the flow channels (36) are in each case gap-like and run transverse to a conveying direction (14) of the multi-shaft screw machine (15).

2. Feed device according to claim 1, **characterized**
**in that** the flow channels (36) widen in a step-shaped manner in each case.

3. Feed device according to claim 1 or 2, **characterized**
**in that** the flow channels (36) in each case have a first channel portion (41) with a minimal first channel width B₁, wherein there applies: 0.01 mm ≤ B₁ ≤ 0.4 mm and in particular 0.05 mm ≤ B₁ ≤ 0.2 mm.

4. Feed device according to any one of claims 1 to 3, **characterized**
**in that** the flow channels (36) in each case have a first channel portion (41) and a second channel portion (42) arranged downstream in the flow direction (37) with a minimal second channel width B₂, wherein there applies: 0.5 mm ≤ B₂ ≤ 3.0 mm and in particular 0.8 mm ≤ B₂ ≤ 2.0 mm.

5. Feed device according to any one of claims 1 to 4, **characterized in that** the filter mechanism (31) has a plurality of filter elements (35) resting on one another and adjacent filter elements (35) in each case form a gap-like flow channel (36).

6. Feed device according to claim 5, **characterized**
**in that** the filter elements (35) have a base plate (38) in each case, on which at least one filter web (39) running transverse to the flow direction (37) and at least two spacers (40) are arranged, and
**in that** the at least two spacers (40) have a larger width (B_{A}) than the at least one filter web (39) to form a flow channel (36).

7. Feed device according to any one of claims 1 to 6, **characterized in that** the filter mechanism (31) is formed from a metal.

8. Feed device according to any one of claims 1 to 7, **characterized in that** a suction opening (30), which is arranged offset with respect to the feed opening (25) in a conveying direction (14) of the multi-shaft screw machine (15), is formed in the housing (16).

9. Feed device according to any one of claims 1 to 8, **characterized in that** the filter mechanism (31) is arranged in the housing (16), in particular in the suction opening (30) and, in the region of the housing bores (17, 18), has a cross sectional shape corresponding to them.

10. Feed device according to any one of claims 1 to 9, **characterized in that** a pressure sensor (33) for monitoring the air pressure (p₁) is arranged in a suction line (29) running between the filter mechanism (31) and the suction mechanism (28).

11. Feed device according to any one of claims 1 to 10, **characterized in that** a fiber filter (32) is arranged in a suction line (29) running between the filter mechanism (31) and the suction mechanism (28).

12. Feed device according to any one of claims 1 to 11, **characterized in that** a monitoring sensor (34) is provided to monitor a plastics material melt back-up.

13. Feed device according to any one of claims 1 to 12, **characterized in that** the feed opening (25) in a conveying direction (14) of the multi-shaft screw machine (15) is delimited by an inlet element (26), which forms an inlet wall (43) with an angle α relative to the conveying direction (14), wherein there applies: 5° ≤ α ≤ 20°.

14. Feed device according to any one of claims 1 to 13, **characterized in that** a cutting mechanism (4) for cutting continuous fibers (5) into fibers (2) with an adjustable fiber length is arranged upstream of the multi-shaft screw machine (15).

## Revendications

1. Dispositif d'alimentation pour l'acheminement de fibres lors de la fabrication de matières plastiques renforcées par des fibres, comprenant
- une machine à plusieurs arbres de vis (15) pour l'acheminement latéral de fibres (2) dans une installation de traitement (3) pour la fabrication de matières plastiques renforcées par des fibres, la machine comprenant
-- un logement (16),
-- plusieurs trous de logement (17, 18) s'interpénétrant,
-- plusieurs arbres de vis sans fin (19, 20) agencés de manière concentrique dans les trous de logement (17, 18) et pouvant être entraînés en rotation autour d'axes de rotation (23, 24) associés, et
-- un orifice d'alimentation (25) pour l'acheminement des fibres (2) dans les trous de logement (17, 18),
- un dispositif d'aspiration (28) pour l'aspiration des fibres (2) à travers l'orifice d'alimentation (25) dans les trous de logement (17, 18) au moyen d'un flux d'air (L), et
- un dispositif de filtration (31) agencé entre le dispositif d'aspiration (28) et les trous de logement (17, 18) et destiné à filtrer les fibres (2) du flux d'air (L), **caractérisé**
**en ce que** le dispositif de filtration (31) forme plusieurs canaux d'écoulement (36) qui présentent dans une direction d'écoulement (37) une section transversale d'écoulement (Q) s'élargissant, et
**en ce que** les canaux d'écoulement (36) sont réalisés chacun sous la forme de fentes et s'étendent transversalement à une direction de transport (14) de la machine à plusieurs arbres de vis (15).

2. Dispositif d'alimentation selon la revendication 1, **caractérisé**
**en ce que** les canaux d'écoulement (36) s'élargissent chacun de manière étagée.

3. Dispositif d'alimentation selon la revendication 1 ou 2, **caractérisé**
**en ce que** les canaux d'écoulement (36) présentent chacun une première partie de canal (41) d'une première largeur minimale de canal B₁, dans lequel : 0,01 mm ≤ B₁ ≤ 0,4 mm et en particulier 0,05 mm ≤ B₁ ≤ 0,2 mm s'appliquent.

4. Dispositif d'alimentation selon l'une quelconque des revendications 1 à 3, **caractérisé**
**en ce que** les canaux d'écoulement (36) présentent chacun une première partie de canal (41) et une deuxième partie de canal (42) située en aval dans la direction d'écoulement (37) et d'une deuxième largeur minimale de canal B₂, dans lequel : 0,5 mm ≤ B₂ ≤ 3,0 mm et en particulier 0,8 mm ≤ B₂ ≤ 2,0 mm s'appliquent.

5. Dispositif d'alimentation selon l'une quelconque des revendications 1 à 4, **caractérisé**
**en ce que** le dispositif de filtration (31) comprend plusieurs éléments filtrants (35) adjacents et des éléments filtrants (35) voisins forment respectivement un canal d'écoulement (36) en forme de fente.

6. Dispositif d'alimentation selon la revendication 5, **caractérisé**
**en ce que** les éléments filtrants (35) présentent chacun une plaque de base (38) sur laquelle sont agencés au moins une nervure de filtration (39) s'étendant transversalement à la direction d'écoulement (37) et au moins deux entretoises (40), et
**en ce que** lesdites au moins deux entretoises (40), pour former un canal d'écoulement (36), présentent une largeur (B_{A}) supérieure à ladite au moins une nervure de filtration (39).

7. Dispositif d'alimentation selon l'une quelconque des revendications 1 à 6, **caractérisé**
**en ce que** le dispositif de filtration (31) est formé d'un métal.

8. Dispositif d'alimentation selon l'une quelconque des revendications 1 à 7, **caractérisé**
**en ce qu'**un orifice d'aspiration (30), lequel est décalé de l'orifice d'alimentation (25) dans une direction de transport (14) de la machine à plusieurs arbres de vis (15), est ménagé dans le logement (16).

9. Dispositif d'alimentation selon l'une quelconque des revendications 1 à 8, **caractérisé**
**en ce que** le dispositif de filtration (31) est agencé dans le logement (16), en particulier dans l'orifice d'aspiration (30) et présente dans la zone des trous de logement (17, 18) une forme de section transversale correspondant auxdits trous.

10. Dispositif d'alimentation selon l'une quelconque des revendications 1 à 9, **caractérisé**
**en ce qu'**un capteur de pression (33) destiné à surveiller la pression d'air (p₁) est agencé dans une conduite d'aspiration (29) s'étendant entre le dispositif de filtration (31) et le dispositif d'aspiration (28).

11. Dispositif d'alimentation selon l'une quelconque des revendications 1 à 10, **caractérisé**
**en ce qu'**un filtre à fibres (32) est agencé dans une conduite d'aspiration (29) s'étendant entre le dispositif de filtration (31) et le dispositif d'aspiration (28).

12. Dispositif d'alimentation selon l'une quelconque des revendications 1 à 11, **caractérisé**
**en ce qu'**un capteur de surveillance (34) est destiné à surveiller un reflux de la masse fondue de matière plastique.

13. Dispositif d'alimentation selon l'une quelconque des revendications 1 à 12, **caractérisé**
**en ce que** l'orifice d'alimentation (25) est délimité dans une direction de transport (14) de la machine à plusieurs arbres de vis (15) par un élément d'entrée (26), qui forme une paroi d'entrée (43) formant un angle α avec la direction de transport (14), dans lequel : 5° ≤ α ≤ 20° s'applique.

14. Dispositif d'alimentation selon l'une quelconque des revendications 1 à 13, **caractérisé**
**en ce qu'**un dispositif de découpage (4) destiné à découper des fibres continues (5) en fibres (2) d'une longueur réglable est situé en amont de la machine à plusieurs arbres de vis (15).
